# EUROPÄISCHE PATENTSCHRIFT

(11) **EP 3 621 834 B1**
(45) Veröffentlichungstag und Bekanntmachung des Hinweises auf die Patenterteilung: **28.02.2024**
(21) Anmeldenummer: 18724805.9
(22) Anmeldetag: 04.05.2018
(51) Int. Cl.: B60H 1/00, H04L 12/40, H04W 4/40, H04L 12/46, H04W 4/44

(54) **KLIMASYSTEM FÜR EIN FAHRZEUG, GATEWAYEINRICHTUNG UND VERFAHREN ZUM EINSTELLEN EINES PARAMETERS EINER KLIMAEINRICHTUNG.**
AIR-CONDITIONING SYSTEM FOR A VEHICLE, GATEWAY DEVICE AND METHOD FOR ADJUSTING A PARAMETER OF AN AIR CONDITIONING DEVICE
SYSTÈME DE CLIMATISATION POUR VÉHICULE, DISPOSITIF PASSERELLE ET PROCÉDÉ DE RÉGLAGE D'UN PARAMÈTRE D'UN DISPOSITIF DE CLIMATISATION

(30) Priorität: 08.05.2017 DE 102017109868
(43) Veröffentlichungstag der Anmeldung: 18.03.2020
(73) Patentinhaber: Webasto SE, 82131 Stockdorf (DE)
(72) Erfinder: SONNEK, Sebastian, 82131 Stockdorf (DE); FELLNER, Günther, 82131 Stockdorf (DE)
(74) Vertreter: Prüfer & Partner mbB Patentanwälte · Rechtsanwälte
(86) Internationale Anmeldenummer: PCT/EP2018/061564
(87) Internationale Veröffentlichungsnummer: WO 2018/206448

(56) Entgegenhaltungen:
- EP-A1- 2 688 267
- WO-A1-2009/141176
- DE-A1-102010 042 311
- US-A1- 2010 106 324

## Beschreibung

Die Erfindung betrifft ein Klimasystem für ein Fahrzeug, eine Gatewayeinrichtung, ein Verfahren zum Einstellen eines Parameters einer Klimaeinrichtung, ein computerlesbares Speichermedium und ein Verfahren zum Steuern eines Klimasystems in einem Fahrzeug.

In vielen Fällen ist es möglich, nachträglich eine Standheizung in ein Fahrzeug einzubauen. Ein grundsätzliches Problem bei der Nachrüstung von Standheizungen besteht darin, dass häufig für die Luftzirkulation keine eigenen Aktuatoren, Lüfter und Lüftungsauslässe bzw. Lüftungsklappen eingebaut werden. Es ist beispielsweise möglich, einen nachrüstbaren Heizer in einen bestehenden Heizkreislauf eines Fahrzeugs einzubauen. Um beispielsweise im abgestellten Zustand des Fahrzeugs eine Beheizung des Innenraums zu ermöglichen, ist es notwendig, die Aktuatoren, z.B. von Lüftungsklappen und von Gebläsen sowie die Standheizung selbst, zu aktivieren bzw. in eine Stellung zu bringen, die eine Luftzirkulation ermöglicht.

In modernen Fahrzeugen werden Bussysteme zur Kommunikation der verschiedenen Komponenten eingesetzt. So kann beispielsweise ein Bedienelement, welches sich im Innenraum des Fahrzeugs befindet, mit der Standheizung über einen Bus verbunden werden. Der Fahrer des Fahrzeugs kann dann über das Bedienelement die Standheizung steuern. Die Standheizung kann mit einem Aktuator derart verbunden sein, dass ein Einschalten der Standheizung auch das Einschalten des Aktuators eines Gebläses veranlasst.

Dokument WO 2009/141176 A1 beschreibt ein Verfahren zum Betreiben eines mobilen Heizsystems, das eine Mehrzahl von brennstoffbetriebenen Heizgeräten, die über ein Bussystem miteinander in Kommunikationsverbindung stehen, aufweist

Nachteilig an dem beschriebenen Stand der Technik ist, dass eine sehr aufwändige Verkabelung notwendig ist. So müssen Kabel von dem Bedienelement zu der Standheizung und von der Standheizung zu einem Aktuator eines Gebläses gelegt werden. Das Gebläse befindet sich jedoch, wie das Bedienelement üblicherweise, im Fahrzeuginnenraum, um einen einfachen Einbau zu ermöglichen. Die Standheizung ist dagegen im Motorraum angeordnet. Der Einbau einer Standheizung ist daher aufwendig. Weiterhin besteht ein Problem im Stand der Technik darin, dass eingebaute Standheizungen nur sehr schwierig nachrüstbar sind.

Ausgehend von diesem Stand der Technik ist es Aufgabe der vorliegenden Erfindung, ein verbessertes Klimasystem anzugeben, welches leicht in ein Fahrzeug eingebaut werden kann. Ferner ist es Aufgabe der Erfindung, ein Klimasystem anzugeben, welches die erforderlichen Kabellängen reduziert. Ferner ist es Aufgabe der Erfindung, eine Gatewayeinrichtung anzugeben, die die vorstehend beschriebenen Nachteile adressiert. Darüber hinaus ist es Aufgabe der Erfindung, ein verbessertes Verfahren zum Einstellen eines Parameters einer Klimaeinrichtung und ein entsprechendes computerlesbares Speichermedium anzugeben.

Die Aufgabe wird gelöst durch ein Klimasystem für ein Fahrzeug nach Anspruch 1.

Ein Kern der Erfindung ist also, dass die Gatewayeinrichtung als Master auf dem Klimabus kommuniziert. Dadurch, dass die Steuerungslogik nunmehr in der Gatewayeinrichtung liegt, kann die Klimaeinrichtung entsprechend weniger komplex ausgebildet sein. Auch ist es möglich, dass die Gatewayeinrichtung von der Klimaeinrichtung entfernt angeordnet ist, z.B. im Fahrzeuginnenraum. Dadurch ist es möglich, dass weitere Komponenten an dem Klimabus angeschlossen werden, ohne dass eine aufwändige Verkabelung hin zur Klimaeinrichtung, die beispielsweise als Heizer ausgebildet ist, erforderlich ist. Der Einbau eines Klimasystems in ein Fahrzeug wird dadurch einfacher. Ein Klimabus kann als jeder beliebige Bus angesehen werden, der geeignet ist, Gatewayeinrichtungen und Klimaeinrichtungen miteinander zu verbinden.

In einer Ausführungsform können die Klimaeinrichtung und/oder das Bedienelement jeweils als Slave des Klimabus ausgebildet sein.

Wenn die Klimaeinrichtung und/oder das Bedienelement als Slave ausgebildet sind, ist ihre Komplexität hinsichtlich der Kommunikation gering. Insbesondere sind notwendige Schaltungen nur einmal auf der Gatewayeinrichtung vorhanden, die als Master agiert. Auch können mehrere Klimaeinrichtungen, Bedienelemente etc. parallel an einem Bus betrieben werden. Ein Nachrüsten ist daher einfach umsetzbar.

Erfindungsgemäß ist die Gatewayeinrichtung dazu ausgebildet, einen Kommunikationsablauf zu mindestens einem Busteilnehmer, insbesondere der Klimaeinrichtung und/oder dem Bedienelement, zu initiieren.

In ihrer Funktion als Master, kann die Gatewayeinrichtung Daten bzw. Signale an die anderen Busteilnehmer senden. Dafür bedarf es keiner vorherigen Abstimmung bzw. Koordination, so dass die Kommunikation von der Gatewayeinrichtung hin zu den anderen Busteilnehmern besonders effizient ausgeführt werden kann. Damit die anderen Busteilnehmer, d.h. die Slaves, untereinander kommunizieren können, kann es notwendig sein, dass diese zunächst ein Anfragesignal an die Gatewayeinrichtung senden, damit die Gatewayeinrichtung den Klimabus zur Kommunikation freigeben kann. In anderen Ausführungsformen wird jedem Slave ein Zeitschlitz durch den Master zugewiesen, wobei jeder Slave dazu ausgebildet ist, in dem ihm zugeordneten Zeitschlitz zu kommunizieren.

In einer Ausführungsform kann die Klimaeinrichtung als ein Gebläse und/oder Lüfter ausgebildet sein. Es ist also auch möglich, dass lediglich ein Gebläse mit der Gatewayeinrichtung betrieben wird. Somit kann auch bereits verbaute Hardware eines Fahrzeugs über die Gatewayeinrichtung gesteuert werden.

In einer Ausführungsform kann die Gatewayeinrichtung mindestens eine, insbesondere aufsteckbare, Kommunikationseinrichtung, z.B. in Form einer Platine, zu drahtlosen Kommunikation umfassen, wobei die Kommunikationseinrichtung zur Kommunikation, insbesondere mittels Bluetooth, mit einem mobilen Endgerät ausgebildet sein kann.

Die Gatewayeinrichtung verfügt somit über die Möglichkeit, Daten über eine Kommunikationseinrichtung drahtlos zu empfangen bzw. zu senden. Der Klimabus und die an diesen angeschlossenen Einrichtungen werden daher für Geräte, die sich außerhalb des Fahrzeugs bzw. außerhalb der Fahrzeughardware befinden, zugänglich.

In einer Ausführungsform kann die Gatewayeinrichtung dazu ausgebildet sein:
- einen Zielparameter von einem/dem mobilen Endgerät zu empfangen;
- unter Verwendung des Zielparameters einen Steuerbefehl zu erzeugen; und
- den Steuerbefehl zur Steuerung der Klimaeinrichtung an die Klimaeinrichtung zu senden.

Zum Beispiel kann das Smartphone einen Soll-Temperaturwert als Zielparameter an die Gatewayeinrichtung senden, die anschließend die Klimaeinrichtung unter Verwendung eines Steuerbefehls steuert. Dadurch wird eine besonders komfortable Benutzung der Klimaeinrichtung durch einen Fahrer bereitgestellt.

In einer Ausführungsform kann die Gatewayeinrichtung eine Schnittstelle zum Senden und/oder zum Empfangen von Fahrzeugdaten von einem Fahrzeugbus umfassen, wobei die Gatewayeinrichtung vorzugsweise dazu ausgebildet ist, die Klimaeinrichtung unter Verwendung der Fahrzeugdaten zu steuern.

Mit dem beschriebenen Klimasystem ist es daher möglich, Informationen in Form von Fahrzeugdaten auch über einen Fahrzeugbus der Gatewayeinrichtung zur Verfügung zu stellen. Es wird daher möglich, dass die Steuerung der Klimaeinrichtung auch Fahrzeugdaten beachtet, die von Komponenten bereitgestellt werden, die an den Fahrzeugbus angeschlossen sind. Das Klimasystem ist daher vielseitig einsetzbar.

In einer Ausführungsform kann die Gatewayeinrichtung dazu ausgebildet sein, als Slave auf dem Fahrzeugbus, z.B. einem LIN-BUS, zu kommunizieren. Das Hinzufügen eines weiteren Slaves zu dem Fahrzeugbus ermöglicht es, dass die Kommunikation auf dem Fahrzeugbus nicht verändert werden muss, denn so kann es nicht zu einem Konflikt mit einem bestehenden Master auf dem Fahrzeugbus kommen.

In einer Ausführungsform kann die Gatewayeinrichtung eine, insbesondere aufsteckbare, (zelluläre) Kommunikationseinrichtung zur Kommunikation in einem zellulären Netzwerk umfassen. Die Gatewayeinrichtung kann also auch Signale über ein Handynetz, z.B. GSM, LTE oder UMTS, empfangen. Die Gatewayeinrichtung kann daher von einem beliebigen Standort aus gesteuert werden. Zum Beispiel kann ein Fahrer aus seiner Wohnung heraus die Soll-Temperatur im Fahrzeug über sein Smartphone steuern.

Auch kann die (zelluläre) Kommunikationseinrichtung z.B. in Form eines "Shields" nachgerüstet werden. Dies erleichtert den Einbau und ermöglicht es, dass ein Kunde Funktionalität nachrüsten kann.

In einer Ausführungsform kann die (zelluläre) Kommunikationseinrichtung zum Senden von Statusinformationen ausgebildet sein. Es kann also ebenso eine Kommunikation in Richtung eines Smartphones ausgeführt werden, bei der Statusinformationen gesendet werden. Der Fahrer eines Fahrzeugs kann daher jederzeit über den Status der an den Klimabus angeschlossenen Komponenten, wie eines Heizers, informiert werden. Dadurch können Schäden frühzeitig erkannt werden und entsprechende Gegenmaßnahmen eingeleitet werden. Darüber hinaus ist es denkbar, dass die Gatewayeinrichtung Statusinformationen vorab an eine Werkstatt übermittelt, die mit der Reparatur des Klimasystems beauftragt ist. Insgesamt wird die Wartung und Überwachung des Klimasystems stark vereinfacht.

In einer Ausführungsform kann die Gatewayeinrichtung mindestens einen, insbesondere zusammen mit einer Platine aufsteckbaren, Sensor zur Erfassung von Sensordaten aufweisen, insbesondere einen Drucksensor und/oder Temperatursensor, wobei die Gatewayeinrichtung dazu ausgebildet sein kann, die Sensordaten über den Klimabus an die Klimaeinrichtung zu senden und/oder Steuerbefehle unter Verwendung der Sensordaten zu generieren. Die Gatewayeinrichtung kann also selbst Sensordaten aufzeichnen, wie z.B. den Druck oder eine Temperatur, und diese zur Steuerung der Klimaeinrichtung verwenden. Es müssen demnach keine gesonderten Sensoren verbaut werden, die mit der Klimaeinrichtung verbunden werden. Die Komplexität des Einbaus des gesamten Klimasystems in ein Fahrzeug wird daher weiter gesenkt.

In einer Ausführungsform kann das Klimasystem eine zweite Klimaeinrichtung umfassen, die über den Klimabus mit der Gatewayeinrichtung verbunden sein kann. Dann ist es möglich, dass die Gatewayeinrichtung Steuerbefehle an beide Klimaeinrichtungen sendet und somit beide Klimaeinrichtungen steuert. Es wird daher möglich gemacht, ein Fahrzeug besonders effizient zu heizen. Z.B. können beide Klimaeinrichtungen gleichzeitig eingeschaltet werden, um ein schnelles Heizen des Fahrzeuginnenraums zu ermöglichen. Ferner können die Klimaeinrichtungen an unterschiedlichen Orten im Fahrzeug derart angeordnet sei, dass die zu verteilende Luftströme effizient an ihren Einsatzort gelangen können.

Die Aufgabe wird ferner gelöst durch eine Gatewayeinrichtung nach Anspruch 9.

Erfindungsgemäß ist die Gatewayeinrichtung dazu ausgebildet, einen Kommunikationsablauf zu einem anderen Busteilnehmer, insbesondere einem Slave des Klimabus, zu initiieren.

Es ergeben sich ähnliche oder identische Vorteile, wie sie bereits im Zusammenhang mit dem Klimasystem beschrieben wurden.

Die Aufgabe wird ferner gelöst durch ein Verfahren zum Einstellen eines Parameters einer Klimaeinrichtung nach Anspruch 11.

Das beschriebene Verfahren ist sehr vielseitig, da die Zielparameter grundsätzlich von einer beliebigen Komponente über das zelluläre Netzwerk an die Gatewayeinrichtung gesendet werden können.

Die Aufgabe wird ferner gelöst durch ein computerlesbares Speichermedium nach Anspruch 12.

Insbesondere wird die Aufgabe gelöst durch ein computerlesbares Speichermedium, welches Instruktionen enthält, die mindestens einen Prozessor dazu veranlassen, ein Verfahren wie es vorstehend beschrieben ist, zu implementieren, wenn die Instruktionen durch den mindestens einen Prozessor ausgeführt werden.

Es ergeben sich ähnliche oder identische Vorteile, wie sie im Zusammenhang mit dem Klimasystem und dem Verfahren beschrieben wurden.

Weitere Ausführungsformen ergeben sich aus den Unteransprüchen.

Nachfolgend wird die Erfindung anhand von mehreren Ausführungsbeispielen beschrieben, die mittels Abbildungen näher erläutert werden. Hierbei zeigen:
- Fig. 1: eine schematische Ansicht eines Fahrzeugs mit einem Klimabus, wobei an dem Klimabus einige Komponenten, umfassend eine Klimaeinrichtung, angeschlossen sind;
- Fig. 2: eine schematische Ansicht eines zweiten Fahrzeugs mit einem Fahrzeugbus und einem Klimabus;
- Fig. 3: eine schematische Ansicht einer Gatewayeinrichtung.

In der nachfolgenden Beschreibung werden für gleiche und gleichwirkende Teile dieselben Bezugsziffern verwendet.

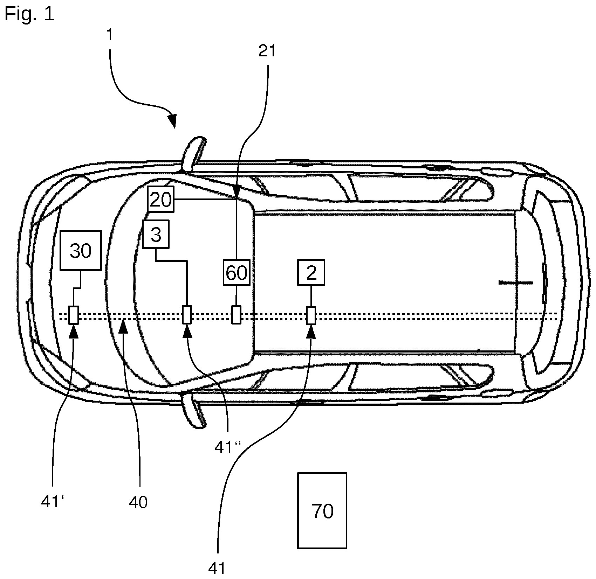

Die Fig. 1 zeigt ein Fahrzeug 1 und ein mobiles Endgerät 70. Das Fahrzeug 1 ist mit den Komponenten dargestellt, die für das Verständnis der Erfindung wichtig sind. So verfügt das Fahrzeug 1 über einen Heizer 30, eine Gatewayeinrichtung 60, ein Bedienelement 2, eine Lüftungseinrichtung 20 und eine Lüfterklappe 3. Der Heizer 30, die Gatewayeinrichtung 60 und das Bedienelement 2 sind an dem Klimabus 40 über Anschlüsse 41, 41', 41" angeschlossen und über den Klimabus 40 miteinander verbunden. In dem gezeigten Ausführungsbeispiel ist der Klimabus 40 als W-Bus ausgebildet.

Der W-Bus zeichnet sich dadurch aus, dass ein Master die Kommunikation zwischen einer Vielzahl von Slaves untereinander und mit dem Master steuert. Der Master kann also erfindungsgemäß ohne eine Abstimmung mit anderen Komponenten, eine Kommunikation initiieren. Der in der Fig. 1 gezeigte Klimabus 40 verfügt über einen Draht, der mittels eines Pull-Up Wiederstandes an seinem Ende terminiert ist.

Die Gatewayeinrichtung 60 ist im gezeigten Ausführungsbeispiel als Master des Klimabus 40 ausgebildet. Der Heizer 30, die Lüfterklappe 3 und das Bedienelement 2 sind als Slaves ausgebildet. Das bedeutet, dass die Gatewayeinrichtung 60 unaufgefordert Daten an den Heizer 30, die Lüfterklappe 3 sowie das Bedienelement 2 senden kann. Jene Komponenten, die als Slave auf dem Klimabus 40 agieren, müssen zunächst bei der Gatewayeinrichtung 60 anfragen, ob sie eine Kommunikation auf dem Klimabus 40 ausführen dürfen.

In dem Ausführungsbeispiel der Fig. 1 ist das Bedienteil 2 als Eingabe/Ausgabegerät ausgebildet. Der Fahrer des Fahrzeugs 1 kann über das Bedienteil 2 eine Soll-Temperatur als Zielparameter im Innenraum des Fahrzeugs 1 eingeben. Das Bedienteil 2 sendet daraufhin die Soll-Temperatur als Zielparameter über den Anschluss 41 auf dem Klimabus 40 an die Gatewayeinrichtung 60. Die Gatewayeinrichtung 60 umfasst einen Temperatursensor, der die Temperatur im Innenraum des Fahrzeugs 1 misst. Wenn die durch den Fahrer eingestellte Soll-Temperatur nicht dem gemessenen Temperaturwert im Inneren des Fahrzeugs 1 entspricht, so sendet die Gatewayeinrichtung 60 einen Steuerbefehl über den Klimabus 40 an den Heizer 30. Wenn die Gatewayeinrichtung 60 festgestellt hat, dass die Temperatur im Inneren des Fahrzeugs 1 zu gering ist, so wird der Heizer 30 dazu veranlasst, zu heizen. Der Heizer 30 heizt den Fahrzeuginnenraum so lange, bis die Gatewayeinrichtung 60 mittels ihres Temperatursensors misst, dass die Soll-Temperatur, die vom Fahrer eingegeben wurde, erreicht ist.

Um ein effizientes Heizen des Fahrzeuginnenraums des Fahrzeugs 1 zu ermöglichen, sendet die Gatewayeinrichtung 60 zusätzlich Steuerbefehle an die Lüfterklappe 3. Die Lüfterklappe 3 umfasst einen Aktuator, z.B. einen Servomotor oder einen Schrittmotor, der dazu ausgebildet ist, einen Einstellwinkel der Lüfterklappe 3 zu verändern. Im gezeigten Ausführungsbeispiel wird die Lüfterklappe 3 derart eingestellt, dass ein möglichst großer Luftstrom durch sie hindurchströmen kann, z.B. auf 90°.

Damit die erwärmte Luft durch die Lüfterklappe 3 hindurchströmen kann, sendet die Gatewayeinrichtung 60 darüber hinaus ein Pulsweitenmodulationssignal (PWM-Signal) an die Lüftungseinrichtung 20. Hierzu verfügt die Gatewayeinrichtung 60 über einen PWM-Controller, z.B. einen Mikrocontroller, der ein entsprechendes Signal über eine Lüftungsverbindung 21 ausgibt, die die Gatewayeinrichtung 60 mit der Lüftungseinrichtung 20 verbindet. Die Lüftungseinrichtung 20 verfügt über einen Aktuator, der unter Verwendung des PWM-Signals angetrieben wird. An dem Aktuator ist ein Ventilator angeordnet.

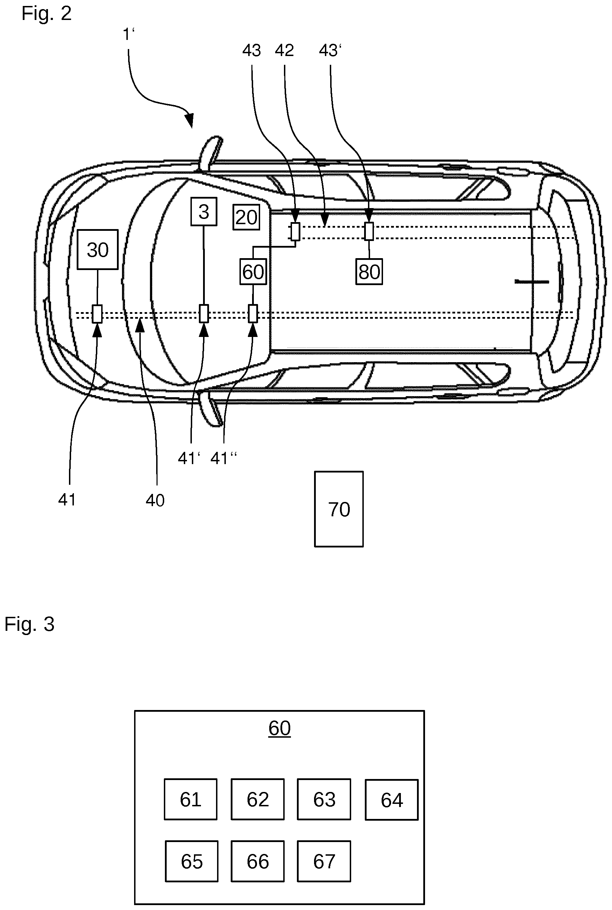

Darüber hinaus umfasst die Gatewayeinrichtung 60 ein Bluetooth-Modul 62 (siehe Fig. 3), das zur drahtlosen Kommunikation mit einem sich in der Nähe befindlichen Gerät eingesetzt werden kann. Zum Beispiel kann eine Bluetooth-Verbindung mit einem mobilen Endgerät 70 hergestellt werden. Das mobile Endgerät 70, bei dem es sich beispielsweise um ein Smartphone des Fahrers handelt, kann verwendet werden, um z.B. eine gewünschte Temperatur im Innenraum des Fahrzeugs 1 anzugeben. Nach einer solchen Eingabe sendet das Smartphone 70 einen Soll-Temperaturwert über die Bluetooth-Verbindung an die Gatewayeinrichtung 60. Die Gatewayeinrichtung 60 erzeugt, wie bereits weiter oben beschrieben, Steuerbefehle, die über den Klimabus 40 an die Klimaeinrichtung 30 gesendet werden, um die Klimaeinrichtung 30 derart zu steuern, dass die Temperatur im Fahrzeuginnenraum dem Soll-Temperaturwert entspricht.

Darüber hinaus kann die Gatewayeinrichtung 60 Statusinformationen über die an dem Klimabus 40 angeschlossenen Geräte an das mobile Endgerät 70 senden. Zum Beispiel kann es sich bei den Statusinformationen um Wartungshinweise, Sensordaten, Herstellerinformationen oder Fehlermeldungen handeln. Der Fahrer des Fahrzeugs 1 hat daher immer Zugriff auf sämtliche Informationen, die die an den Klimabus 40 angeschlossenen Geräte betreffen.

Die Fig. 2 zeigt ein zweites Fahrzeug 1', welches im Unterschied zum Fahrzeug der Fig. 1 zusätzlich zu einem Klimabus 40 über einen Fahrzeugbus 42 verfügt. An dem Klimabus 40 sind, wie in Fig. 1, der Heizer 30 bzw. die Klimaeinrichtung 30, die Lüfterklappe 3 sowie die Gatewayeinrichtung 60 angeschlossen. In dem Ausführungsbeispiel der Fig. 2 ist der Klimabus 40 als zweidrahtiger Bus ausgebildet. Selbstverständlich kann auch im Ausführungsbeispiel der Fig. 2 ein eindrahtiger Klimabus 40, wie er im Zusammenhang mit der Fig. 1 beschrieben ist, verwendet werden. Die Gatewayeinrichtung 60 ist als Master des Klimabus 40 ausgebildet. Die Klimaeinrichtung 30 sowie die Lüfterklappe 3 sind jeweils als Slave des Klimabus 40 ausgebildet.

An dem Fahrzeugbus 42 sind die Gatewayeinrichtung 60 und ein Klimabedienteil 80 angeschlossen. Die Gatewayeinrichtung 60 ist als Slave des Fahrzeugbus 42 ausgebildet. Die Gatewayeinrichtung 60 nimmt also eine Doppelfunktion ein. Zum einen agiert sie als Master auf dem Klimabus 40 und zum anderen als Slave auf dem Fahrzeugbus 42. In einem weiteren Ausführungsbeispiel hat die Gatewayeinrichtung 60 bezüglich des Fahrzeugbus 42 lediglich eine Überwachungsfunktion und hört den Datenverkehr auf dem Fahrzeugbus 42 lediglich ab. Das bedeutet, die Gatewayeinrichtung 60 kann auch weder als Master noch als Slave auf dem Fahrzeugbus 42 ausgebildet sein. Im dargestellten Ausführungsbeispiel der Fig. 2 wird das Klimabedienteil 80 dazu verwendet, eine Benutzereingabe anzunehmen und über den Fahrzeugbus 42 der Gatewayeinrichtung als Fahrzeugdaten zur Verfügung zu stellen. Die Gatewayeinrichtung 60 verarbeitet die Fahrzeugdaten des Klimabedienteils 80 und erzeugt Steuerbefehle, die über den Klimabus 40 an die Klimaeinrichtung 30 zur Steuerung der Klimaeinrichtung 30 übermittelt werden. Die Gatewayeinrichtung 60 wird also in dem gezeigten Ausführungsbeispiel als Brücke zwischen dem Klimabus 40 und dem Fahrzeugbus 42 eingesetzt.

In dem gezeigten Ausführungsbeispiel der Fig. 2 ist die Gatewayeinrichtung 60 ferner dazu ausgebildet, mittels ihrer Bluetooth-Kommunikationseinrichtung 62 mit einer Lüftungseinrichtung 20 zu kommunizieren. Die Gatewayeinrichtung 60 der Fig. 2 ist dazu ausgebildet, per Bluetooth Steuerbefehle an die Lüftungseinrichtung 20 zu übermitteln. Die Lüftungseinrichtung 20 der Fig. 2 umfasst hierzu eine Bluetooth-Empfangseinheit und eine Recheneinrichtung, z.B. einen Mikrocontroller, um die empfangenen Steuersignale in PWM-Signale umzuwandeln, um einen Aktuator zu steuern.

Selbstverständlich kann die Gatewayeinrichtung 60 auch mit einer Vielzahl weiterer Sensoren und/oder Aktuatoren per Bluetooth kommunizieren, so dass die notwendige Verkabelung im Fahrzeug deutlich reduziert werden kann.

Zusätzlich zu der Bluetooth-Kommunikationseinrichtung 62 umfasst die Gatewayeinrichtung 60 ein aufsteckbares LTE-Modul 68 zur Kommunikation in einem LTE-Netzwerk. In dem Ausführungsbeispiel der Fig. 2 ist ferner ein Smartphone 70 vorgesehen, welches ebenfalls über ein LTE-Kommunikationsmodul verfügt, so dass das Smartphone 70 über das LTE-Netzwerk mit der Gatewayeinrichtung 60 kommunizieren kann. Insbesondere ist es nicht erforderlich, dass sich das Smartphone 70 in der Nähe des Fahrzeugs 1' befindet. Es wird also ermöglicht, dass ein Fahrer des Fahrzeugs 1' von einem beliebigen Ort auf der Welt die Komponenten des Fahrzeugs 1' über die Gatewayeinrichtung 60 steuert. So kann der Fahrer eine Soll-Temperatur angeben, die durch die Klimaeinrichtung 30 geregelt werden soll. Darüber hinaus kann der Fahrer mittels seines Smartphones 70 über die Gatewayeinrichtung 60 Informationen abfragen, die auf dem Klimabus 40 oder auf dem Fahrzeugbus 42 übertragen werden. Dem Fahrer können daher umfassende Informationen zu dem Zustand des Fahrzeugs 1' angezeigt werden.

Die Fig. 3 zeigt eine schematische Darstellung der Gatewayeinrichtung 60. Die Gatewayeinrichtung 60 umfasst eine Recheneinheit 61, die z.B. als Mikrocontroller ausgebildet ist. Die Recheneinrichtung 61 ist dazu ausgebildet, Steuerbefehle über eine Bus-Kommunikationseinrichtung 63 zu empfangen und anschließend zu verarbeiten. Darüber hinaus verfügt die Gatewayeinrichtung 60 über eine Kommunikationseinrichtung 62 zur drahtlosen Kommunikation, die zur Kommunikation mittels Bluetooth und/oder zur Kommunikation mit einem zellulären Netzwerk ausgebildet ist.

Die Bus-Kommunikationseinrichtung 63 ist zum Empfangen und zum Senden von Daten über mindestens einen Bus 40, 42 ausgebildet. Empfangene Daten können in einer Speichereinrichtung 65 gespeichert werden, so dass die Recheneinheit 61 diese verarbeiten kann. Ferner verfügt die Gatewayeinrichtung über einen PWM-Anschluss, mittels dessen ein PWM-Signal an einen Verbraucher, z.B. die Lüftereinrichtung 20, gesendet werden kann. Zur Erzeugung des PWM-Signals kann die Recheneinrichtung 61 verwendet werden. Zusätzlich verfügt die Gatewayeinrichtung 60 über einen Temperatursensor 66 und einen Drucksensor 67. Die beiden Sensoren 66 und 67 können Signale abgeben, die von der Recheneinrichtung 61 als Temperatur bzw. Druck interpretiert werden und in der Speichereinrichtung 65 zwischengespeichert werden können. Unter Verwendung der Sensordaten kann die Recheneinrichtung 61 Steuerbefehle berechnen, die zur Steuerung des Heizers 30 verwendet werden können.

Mit Blick auf Fig. 2 wird nun noch einmal ein Verfahren zum Einbau der wesentlichen Komponenten in das Fahrzeug 1` beschrieben. Zunächst muss eine Klimaeinrichtung 30 innerhalb des Fahrzeugs 1' angeordnet werden. Hierzu eignet sich besonders der Motorraum des Fahrzeugs 1'. Die Klimaeinrichtung 30 wird über einem Anschluss 41 mit einem Klimabus 40 verbunden. Anschließend kann die Gatewayeinrichtung 60 im Fahrzeug 1' angeordnet werden. Die Gatewayeinrichtung 60 kann prinzipiell überall im Fahrzeug 1' angeordnet werden. Bevorzugt ist jedoch eine Anordnung innerhalb des Fahrzeuginnenraums, so dass ein Einbau leicht ausgeführt werden kann. Die Gatewayeinrichtung 60 wird nun mittels eines Anschlusses 41" mit dem Klimabus 40 verbunden und ebenso mit einem Anschluss 43 mit dem Fahrzeugbus 42 verbunden. Allein durch diese Schritte ist es möglich, dass die Gatewayeinrichtung 60 die Klimaeinrichtung 30 steuert.

In einem Ausführungsbeispiel kann auch die Gatewayeinrichtung 60 nachgerüstet werden. Dabei kann auf den Einbau zusätzlicher Klimaeinrichtungen 30 oder Bedienelemente 2 verzichtet werden. Es wird dann ermöglicht, dass z.B. ein bestehendes Klimasystem eines Fahrzeugs 1, 1' mittels der Gatewayeinrichtung 60 überwacht und/oder gesteuert wird.

### Bezugszeichenliste

- 1, 1`: Fahrzeug
- 2: Bedienelement
- 3: Lüfterklappe
- 20: Lüftungseinrichtung
- 21: Lüftungsverbindung
- 30: Heizer/Standheizung
- 40: Klimabus, W-BUS
- 41, 41', 41": Anschluss für W-BUS
- 42: Fahrzeugbus, LIN-BUS
- 43, 43': Anschluss für Fahrzeubus/LIN-BUS
- 55: Recheneinheit bzw. Mikrocontroller
- 60: Gatewayeinrichtung
- 61: Recheneinrichtung/Mikrocontroller
- 62: Drahtlos-Kommunikationseinrichtung
- 63: BUS-Kommunikationseinrichtung
- 64: PWM-Anschluss
- 65: Speichereinrichtung
- 66: Temperatursensor
- 67: Drucksensor
- 70: (mobiles) Endgerät
- 80: Klimabedienteil

## Patentansprüche

1. Klimasystem für ein Fahrzeug (1, 1'), umfassend:
- einen Klimabus (41);
- eine Klimaeinrichtung (30), insbesondere einen Heizer (30);
- ein Bedienelement (2) zur Einstellung mindestens eines Zielparameters, insbesondere eines Soll-Temperaturwerts, der Klimaeinrichtung (30);
- eine Gatewayeinrichtung (60), die über den Klimabus (41) zumindest mit der Klimaeinrichtung (30) verbunden ist,
wobei
die Gatewayeinrichtung (60) dazu ausgebildet ist, als Master auf dem Klimabus (41) zu kommunizieren und eine Steuerungseinrichtung (66) zum Steuern der Klimaeinrichtung (30) umfasst, und
wobei die Gatewayeinrichtung (60) dazu ausgebildet ist,
einen Kommunikationsablauf zu mindestens einem Busteilnehmer, insbesondere der Klimaeinrichtung (30) und/oder dem Bedienelement (2), zu initiieren.

2. Klimasystem nach Anspruch 1,
**dadurch gekennzeichnet, dass**
die Klimaeinrichtung (30) und/oder das Bedienelement (2) jeweils als Slave des Klimabus (41) ausgebildet sind.

3. Klimasystem nach einem der vorhergehenden Ansprüche,
**dadurch gekennzeichnet, dass**
die Gatewayeinrichtung (60) mindestens eine, insbesondere aufsteckbare, Kommunikationseinrichtung (62) zur drahtlosen Kommunikation umfasst, wobei die Kommunikationseinrichtung (62) zur Kommunikation, insbesondere mittels Bluetooth, mit einem mobilen Endgerät (70) ausgebildet ist.

4. Klimasystem nach einem der vorhergehenden Ansprüche, insbesondere nach Anspruch 3,
**dadurch gekennzeichnet, dass**
die Gatewayeinrichtung (60) dazu ausgebildet ist:
- einen Zielparameter von einem/dem mobilen Endgerät (70) zu empfangen;
- unter Verwendung des Zielparameters einen Steuerbefehl zu erzeugen; und
- den Steuerbefehl zur Steuerung der Klimaeinrichtung (30) an die Klimaeinrichtung (30) zu senden.

5. Klimasystem nach einem der vorhergehenden Ansprüche,
**dadurch gekennzeichnet, dass**
die Gatewayeinrichtung (60) eine Schnittstelle zum Senden und/oder zum Empfangen von Fahrzeugdaten von einem Fahrzeugbus (42) umfasst,
wobei die Gatewayeinrichtung (60) vorzugsweise dazu ausgebildet ist, die Klimaeinrichtung (30) unter Verwendung der empfangenen Fahrzeugdaten zu steuern.

6. Klimasystem nach einem der vorhergehenden Ansprüche, insbesondere nach Anspruch 4 oder 5,
**dadurch gekennzeichnet, dass**
die Gatewayeinrichtung (60) dazu ausgebildet ist, als Slave auf dem Fahrzeugbus (42) zu kommunizieren.

7. Klimasystem nach einem der vorhergehenden Ansprüche,
**dadurch gekennzeichnet, dass**
die Gatewayeinrichtung (60) eine, insbesondere aufsteckbare, (zelluläre) Kommunikationseinrichtung (67) zur Kommunikation in einem zellulären Netzwerk umfasst.

8. Klimasystem nach einem der vorhergehenden Ansprüche,
**dadurch gekennzeichnet, dass**
die Gatewayeinrichtung (60) mindestens einen, insbesondere zusammen mit einer Platine aufsteckbaren, Sensor (67) zur Erfassung von Sensordaten aufweist, insbesondere einen Drucksensor (67) und/oder Temperatursensor, wobei die Gatewayeinrichtung (60) dazu ausgebildet ist, die Sensordaten über den Klimabus (41) an die Klimaeinrichtung (30) zu senden und/oder Steuerbefehle unter Verwendung der Sensordaten zu generieren.

9. Gatewayeinrichtung (60), insbesondere in einem Klimasystem nach einem der Ansprüche 1 bis 8, umfassend:
- mindestens eine, insbesondere aufsteckbare, erste Kommunikationseinrichtung (62) zum (drahtlosen) Empfang von Zielparametern;
- eine Steuerungseinrichtung (66) zum Steuern einer Klimaeinrichtung (30) unter Verwendung der Zielparameter;
- eine, insbesondere aufsteckbare, zweite Kommunikationseinrichtung zur Kommunikation auf einem Klimabus (41),
**dadurch gekennzeichnet, dass**
die Gatewayeinrichtung (60) dazu ausgebildet ist, als Master auf dem Klimabus (41) zu kommunizieren, und
wobei die Gatewayeinrichtung (60) dazu ausgebildet ist,
einen Kommunikationsablauf zu mindestens einem Busteilnehmer, insbesondere der Klimaeinrichtung (30) und/oder einem Bedienelement (2), zu initiieren.

10. Gatewayeinrichtung (60) nach Anspruch 9,
**dadurch gekennzeichnet, dass**
die Gatewayeinrichtung (60) dazu ausgebildet ist, einen Kommunikationsablauf zu einem anderen Busteilnehmer, insbesondere einem Slave des Klimabus, zu initiieren.

11. Verfahren zum Einstellen eines Parameters einer Klimaeinrichtung (30), insbesondere eines Heizers (30), umfassend:
- drahtloses Empfangen mindestens eines Zielparameters über ein vorzugsweise zelluläres Netzwerk an einer Gatewayeinrichtung (60);
- Verarbeiten des mindestens einen Zielparameters durch die Gatewayeinrichtung (60) und Erzeugen mindestens eines Steuerbefehls;
- Einstellen eines Parameters einer Klimaeinrichtung (30) unter Verwendung eines Klimabusses (41), wobei der Parameter durch die Gatewayeinrichtung (60) basierend auf dem mindestens einen Steuerbefehl ermittelt wird, wobei die Gatewayeinrichtung (60) dazu ausgebildet ist, einen Kommunikationsablauf zu mindestens einem Busteilnehmer, insbesondere der Klimaeinrichtung (30) und/oder einem Bedienelement (2), zu initiieren.

12. Computerlesbares Speichermedium, welches Instruktionen enthält, die mindestens einen Prozessor dazu veranlassen, ein Verfahren nach Anspruch 11 zu implementieren, wenn die Instruktionen durch den mindestens einen Prozessor ausgeführt werden.

## Claims

1. Air-conditioning system for a vehicle (1, 1'), comprising:
- an air-conditioning bus (41);
- an air-conditioning device (30), in particular a heater (30);
- an operator control element (2) for adjusting at least one target parameter, in particular a setpoint temperature value, of the air-conditioning device (30);
- a gateway device (60), which is connected via the air-conditioning bus (41) at least with the air-conditioning device (30),
wherein
the gateway device (60) is configured to communicate as a master on the air-conditioning bus (41) and comprises a control device (66) for controlling the air-conditioning device (30), and
wherein the gateway device (60) is configured to initiate a communication sequence with at least one with at least one bus user, in particular the air-conditioning device (30) and/or the operator control element (2).

2. Air-conditioning system according to Claim 1,
**characterized in that**
the air-conditioning device (30) and/or the operator control element (2) are each embodied as a slave of the air-conditioning bus (41).

3. Air-conditioning device according to one of the preceding claims,
**characterized in that**
the gateway device (60) comprises at least one, in particular plug-in, communication device (62), for wireless communication, wherein the communication device (62) is designed to communicate with a mobile terminal (70), in particular by means of Bluetooth.

4. Air-conditioning system according to one of the preceding claims, in particular according to Claim 3,
**characterized in that**
the gateway device (60) is configured:
- to receive a target parameter from a/the mobile terminal (70);
- to generate a control command using the target parameter; and
- to transmit the control command for controlling the air-conditioning device (30) to the air-conditioning device (30).

5. Air-conditioning system according to one of the preceding claims,
**characterized in that**
the gateway device (60) comprises an interface for transmitting and/or for receiving vehicle data from a vehicle bus (42), wherein the gateway device (60) is preferably configured to control the air-conditioning device (30) using the received vehicle data.

6. Air-conditioning system according to one of the preceding claims, in particular according to Claim 4 or 5,
**characterized in that**
the gateway device (60) is configured to communicate as a slave on the vehicle bus (42).

7. Air-conditioning system according to one of the preceding claims
**characterized in that**
the gateway device (60) comprises an, in particular plug-in, (cellular) communication device (67) for communicating in a cellular network.

8. Air-conditioning system according to one of the preceding claims,
**characterized in that**
the gateway device (60) has at least one sensor (67), in particular which can be plugged together with a circuit board, for acquiring sensor data, in particular a pressure sensor (67) and/or temperature sensor, wherein the gateway device (60) is configured to transmit the sensor data to the air-conditioning device (30) via the air-conditioning bus (41) and/or to generate control commands using the sensor data.

9. Gateway device (60), in particular in an air-conditioning system according to one of Claims 1 to 8, comprising:
- at least one, in particular plug-in, first communication device (62) for (wirelessly) receiving target parameters;
- a control device (66) for controlling an air-conditioning device (30) using the target parameters; and
- an, in particular plug-in, second communication device for communicating on an air-conditioning bus (41);
**characterized in that**
the gateway device (60) is configured to communicate as a master on the air-conditioning bus (41), and
wherein the gateway device (60) is configured to initiate a communication sequence with at least one with at least one bus user, in particular the air-conditioning device (30) and/or the operator control element (2).

10. Gateway device (60) according to Claim 9,
**characterized in that**
the gateway device (60) is configured to initiate a communication sequence with another bus user, in particular a slave of the air-conditioning bus.

11. Method for setting a parameter of an air-conditioning device (30), in particular of a heater (30), comprising:
- wirelessly receiving at least one target parameter via a preferably cellular network at a gateway device (60);
- processing the at least one target parameter by means of the gateway device (60) and generating at least one control command;
- setting a parameter of an air-conditioning device (30) using an air-conditioning bus (41), wherein the parameter is determined by the gateway device (60) on the basis of the at least one control command, wherein the gateway device (60) is configured to initiate a communication sequence with at least one with at least one bus user, in particular the air-conditioning device (30) and/or the operator control element (2).

12. Computer-readable storage medium which contains instructions which cause at least one processor to implement a method according to Claim 11 when the instructions are executed by the at least one processor.

## Revendications

1. Système de climatisation pour un véhicule (1, 1'), comprenant :
- un bus de climatisation (41) ;
- un dispositif de climatisation (30), en particulier un chauffage (30) ;
- un élément de commande (2) pour régler au moins un paramètre cible, en particulier une valeur de température de consigne, du dispositif de climatisation (30) ;
- un dispositif passerelle (60) qui est relié au moins au dispositif de climatisation (30) par le bus de climatisation (41),
le dispositif passerelle (60) étant conçu pour communiquer en tant que maître sur le bus de climatisation (41) et comprenant un dispositif de commande (66) pour commander le dispositif de climatisation (30), et
le dispositif passerelle (60) étant conçu pour initier un processus de communication avec au moins un participant au bus, en particulier le dispositif de climatisation (30) et/ou l'élément de commande (2).

2. Système de climatisation selon la revendication 1,
**caractérisé en ce que**
le dispositif de climatisation (30) et/ou l'élément de commande (2) sont chacun conçus en tant qu'esclaves du bus de climatisation (41).

3. Système de climatisation selon l'une des revendications précédentes,
**caractérisé en ce que**
le dispositif passerelle (60) comprend au moins un dispositif de communication (62), notamment enfichable, pour une communication sans fil, le dispositif de communication (62) étant conçu pour communiquer, notamment par Bluetooth, avec un terminal mobile (70).

4. Système de climatisation selon l'une quelconque des revendications précédentes, notamment selon la revendication 3,
**caractérisé en ce que**
le dispositif passerelle (60) est configuré pour :
- recevoir un paramètre cible d'un ou du terminal mobile (70) ;
- générer une instruction de commande en utilisant le paramètre cible ; et
envoyer l'instruction de commande au dispositif de climatisation (30) pour commander le dispositif de climatisation (30).

5. Système de climatisation selon l'une quelconque des revendications précédentes,
**caractérisé en ce que**
le dispositif passerelle (60) comprend une interface d'émission et/ou de réception de données de véhicule provenant d'un bus de véhicule (42), le dispositif passerelle (60) étant de préférence adapté pour commander le dispositif de climatisation (30) en utilisant les données de véhicule reçues.

6. Système de climatisation selon l'une des revendications précédentes, notamment selon la revendication 4 ou 5,
**caractérisé en ce que**
le dispositif passerelle (60) est adapté pour communiquer en tant qu'esclave sur le bus de véhicule (42).

7. Système de climatisation selon l'une des revendications précédentes,
**caractérisé en ce que**
le dispositif passerelle (60) comprend un dispositif de communication (cellulaire) (67), notamment enfichable, pour communiquer dans un réseau cellulaire.

8. Système de climatisation selon l'une des revendications précédentes,
**caractérisé en ce que**
le dispositif passerelle (60) comporte au moins un capteur (67), notamment enfichable avec une platine, pour l'acquisition de données de capteur, notamment un capteur de pression (67) et/ou un capteur de température, le dispositif passerelle (60) étant conçu pour envoyer les données de capteur au dispositif de climatisation (30) via le bus de climatisation (41) et/ou pour générer des instructions de commande en utilisant les données de capteur.

9. Dispositif passerelle (60), notamment dans un système de climatisation selon l'une des revendications 1 à 8, comprenant :
- au moins un premier dispositif de communication (62), notamment enfichable, pour la réception (sans fil) de paramètres cibles ;
- un dispositif de commande (66) pour commander un dispositif de climatisation (30) en utilisant les paramètres cibles ;
- un deuxième dispositif de communication, en particulier enfichable, pour la communication sur un bus de climatisation (41),
**caractérisé en ce que**
le dispositif passerelle (60) est conçu pour communiquer en tant que maître sur le bus de climatisation (41), et
le dispositif passerelle (60) est conçu pour initier un processus de communication avec au moins un participant au bus, en particulier le dispositif de climatisation (30) et/ou un élément de commande (2).

10. Dispositif passerelle (60) selon la revendication 9,
**caractérisé en ce que**
le dispositif passerelle (60) est conçu pour initier un processus de communication avec un autre participant au bus, notamment un esclave du bus de climatisation.

11. Procédé de réglage d'un paramètre d'un dispositif de climatisation (30), notamment d'un chauffage (30), comprenant :
- la réception sans fil d'au moins un paramètre cible via un réseau, de préférence cellulaire, au niveau d'un dispositif passerelle (60) ;
- le traitement dudit au moins un paramètre cible par le dispositif passerelle (60) et la génération d'au moins un ordre de commande ;
- le réglage d'un paramètre d'un dispositif de climatisation (30) en utilisant un bus de climatisation (41), le paramètre étant déterminé par le dispositif passerelle (60) sur la base de ladite au moins une instruction de commande, le dispositif passerelle (60) étant conçu pour initier un processus de communication avec au moins un participant au bus, en particulier le dispositif de climatisation (30) et/ou un élément de commande (2).

12. Moyen de stockage lisible par ordinateur contenant des instructions qui amènent au moins un processeur à mettre en œuvre un procédé selon la revendication 11 lorsque lesdites instructions sont exécutées par ledit au moins un processeur.
